# EUROPEAN PATENT SPECIFICATION

(11) **EP 4 211 770 B1**
(45) Date of publication and mention of the grant of the patent: **01.11.2023**
(21) Application number: 22785979.0
(22) Date of filing: 13.09.2022
(51) Int. Cl.: H02J 3/12, H02H 9/04, G05F 1/455, H02J 3/14, H02J 3/04, H02J 3/38

(54) **A PHASE VOLTAGE REGULATOR AND A METHOD FOR REGULATING PHASE VOLTAGE**
PHASENSPANNUNGSREGLER UND VERFAHREN ZUR REGELUNG DER PHASENSPANNUNG
RÉGULATEUR DE TENSION DE PHASE ET PROCÉDÉ POUR RÉGULATION DE TENSION DE PHASE

(30) Priority: 14.09.2021 PL 43893921; 16.02.2022 EP 22157152
(43) Date of publication of application: 19.07.2023
(73) Proprietor: PRZEDSIEBIORSTWO CR-GAMA SPOLKA OGRANICZONA ODPOWIEDZIALNOSCIA, 43-316 Bielsko-Biala (PL); Carbol, Jacek, 43-246 Strumien (PL)
(72) Inventor: CARBOL, Jacek, 43-246 Strumien (PL)
(74) Representative: Kancelaria Eupatent.pl Sp. z.o.o
(86) International application number: PCT/EP2022/075466
(87) International publication number: WO 2023/041547

(56) References cited:
- WO-A1-2016/147574
- US-A- 5 712 554
- US-A1- 2005 093 375
- US-A1- 2017 250 542

## Description

### TECHNICAL FIELD

The present invention relates to phase voltage regulation and is intended to monitor and adjust power grid voltage in photovoltaic installations and other renewable energy sources.

### BACKGROUND

The increasing number of renewable energy sources, in particular photovoltaic installations, causes more and more frequent problems with excessive voltage increase in a power grid to which these sources are connected. This problem is visible, for example, when there are many home photovoltaic installations within an area served by a transformer station, wherein during a period of good weather conditions an increase in the supply of electricity to the power grid is observed. This causes the voltage in the grid to exceed a threshold level. In typical photovoltaic installations, this causes the inverter of the installation to shut down due to a voltage error. Then, it is necessary for the installation to wait some time and check again whether the voltage of the power grid has dropped to an acceptable level. During this waiting time, the photovoltaic installation does not produce any energy, and household appliances consume energy from the power grid.

A patent application US2015244174 discloses a voltage compensator for systems using energy from wind or sun. The compensator supplies energy to the power grid when the grid voltage is below a certain threshold value. However, this compensator does not provide any possibility of reducing the voltage supplied from the power grid to the receivers in a situation when the voltage from the power grid is too high.

A patent application CN106961108A discloses a power regulator supplied from two branches, which in the event of failure of one branch switches the power receivers to the other branch. This solution also does not ensure the possibility of reducing the voltage supplied from the power grid to the receivers in a situation when the voltage from the power grid is too high.

A patent US5712554 discloses a voltage compensation device for other utilization system that requires an input voltage within a given range. The voltage compensation device includes a separating transformer having a secondary winding connected in series with the phase line. A voltage sensor is configured to switch a relay when an over-voltage occurs on the phase line so as to connect the primary winding of the separating transformer to the phase line to reduce the voltage.

A patent application US2017250542 discloses a power distribution system for providing a desired value of voltage regulation.

A patent application WO2016147574 discloses a voltage stabilization device equipped with a transformer circuit and a breaker circuit.

### SUMMARY OF THE INVENTION

There is a need to provide a device that would protect the power grid against excessive voltage increase during production of electric power by photovoltaic installations and other renewable sources, while at the same time protect the inverter of the photovoltaic installation against shutdown.

The object of the invention is a phase voltage regulator configured for being connected in a phase line for two-way transmission of energy between a power grid and a receiving installation comprising energy receivers and an inverter that is configured to generate voltage from renewable energy sources. The phase voltage regulator comprises a separating transformer having a secondary winding, configurec to connect the secondary winding into the phase line between the power grid and the receiving installation; a regulating circuit configured to measure voltage at a phase line at the power grid side and, when the measured voltage exceeds a threshold value, to induce, in the secondary winding of the separating transformer, an electromotive force having a direction opposite to the flowing current and consequently reduce the voltage of the phase line on the receiving installation side. The regulating circuit comprises:
a first contactor connected to the seconday winding of the separating transformer, a first relay configured to switch on the first contactor;
a switch; a controlling unit configured to measure the voltage at the phase line on the power grid side and to control the switch depending on the measured value of the voltage; wherein the switch is configured to operate: in a first position, when the voltage of the power grid does not exceed the threshold voltage, wherein in the first position, the switch is configured to provide a signal to the first relay so as to short the first contactor to the position at which the secondary winding is short-circuited for direct connection of the receiving installation to the power grid; and in a second position, when the voltage of the power grid exceeds the threshold voltage, wherein in the second position, the switch is configured not to provide a signal to the first relay, so that the first contactor does not close the secondary winding anc the receiving installation is connected to the power grid through the secondary winding, and wherein the regulating circuit is configured to supply voltage to the primary winding to induce magnetic field in the core of the separating transformer. The phase voltage regulator further comprises an outlet socket for connecting thereto an energy receiver, a second contactor and a second relay, wherein the outlet socket is configured to be connected to the phase line on the receiving installation side by means of the second contactor controlled by the second relay configured to close the second contactor upon detecting activity of the separating transformer.

Preferably, the separating transformer comprises an auxiliary primary winding connected to a bridge connected to a third relay that is connected in parallel to a resistor ir the line that is configured to supply voltage to the winding primary of the separating transformer.

The separating transformer may comprise an auxiliary primary winding connected to a bridge that is connected to a signaling diode.

Preferably, the regulator may further comprise a storage with a memory configured to store historical values of the voltage at the inverter and/or of the voltage at the power grid.

The invention also relates to a method for adjusting phase voltage supplied through a phase line from a power grid to a receiving installation comprising an inverter that generates voltage from renewable energy sources and energy receivers, the method comprising connecting, into the phase line between the power grid and the receiving installation, the phase voltage regulator according to the invention.

Further, the invention relates to an energy receiving installation comprising energy receivers, an inverter that generates voltage from renewable energy sources, and the phase voltage regulator according to the invention, the energy receiving installation being configured to be connected to a phase line of the power grid via the phase voltage regulator.

The phase voltage regulator operates by subtracting voltage by an opposite vector that is induced in the low-voltage secondary transformed winding at the side where the inverter is connected to the power grid.

The phase voltage regulator according to the invention protects the power grid against excessive voltage increase when the current generated by renewable energy sources, in particular photovoltaic installations, is fed into the grid. The regulator according to the invention also protects the local installation against switching off the inverter that generates voltage from renewable energy sources, caused by excessive voltage in the power grid.

Consequently, the operation of the installation becomes more uniform, because voltage is adjusted without the need to turn off the inverter. This allows to avoid at least some of the situations that could lead to a shutdown of the installation and thus allows to increase the total amount of energy produced by the installation by securing the continuity of electricity production.

Moreover, by stabilizing the upper voltage level in the power grid at a permitted level, the receivers connected to the power grid (e.g., household appliances) can be protected against damage. This will reduce possible claims of users of that equipment against the power grid operator.

Use of a circuit for reducing voltage from the inverter avoids a situation of pushing energy from the inverter to the power grid when the voltage of the power grid at the phase line is excessive.

### BRIEF DESCRIPTION OF DRAWINGS

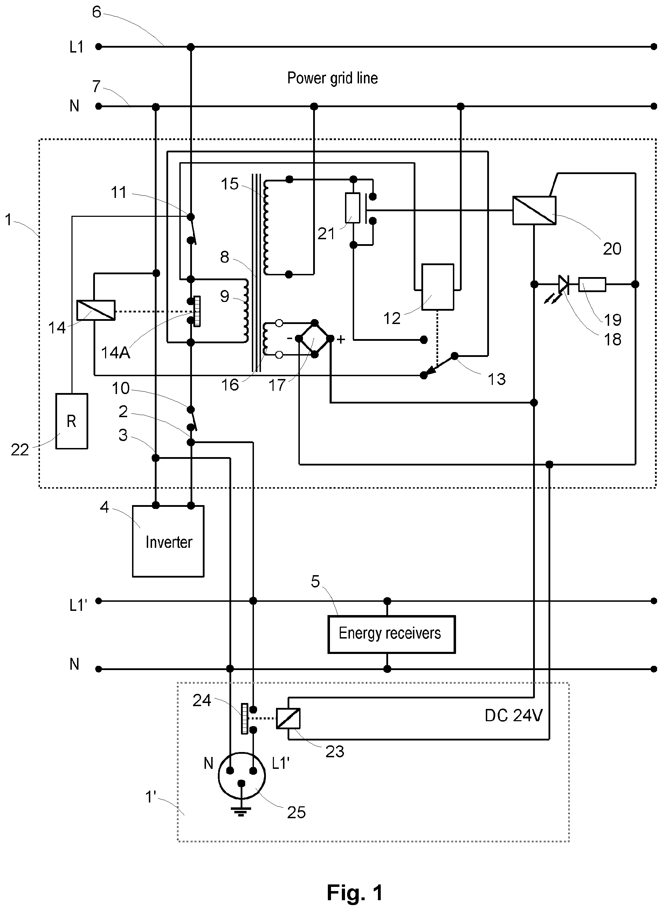

The subject of the invention is presented by means of an embodiment on the drawing, in which Fig. 1 shows a diagram of a phase voltage regulator connected between the inverter and the power grid and local electric installation.

### DETAILED DESCRIPTION

The following detailed description is of the best currently contemplated modes of carrying out the invention. The description is not to be taken in a limiting sense, but is made merely for the purpose of illustrating the general principles of the invention.

The phase voltage regulator 1 has input terminals 2, 3 to which there is connected an inverter 4 connected to a renewable energy source, for example a photovoltaic installation, as well as local energy receivers 5, through a phase line L1' and a neutral line N of the receiving installation. The regulator 1 further comprises output terminals 6, 7 connected respectively to a phase line L1 and a neutral line N of the power grid. The regulator 1 comprises a separating transformer 8, preferably a toroidal transformer, with a primary winding 15 and a secondary winding 9, wherein the transformer may further have an auxiliary primary winding 16. The windings are wound on a core with a closed magnetic field. It is preferable for the secondary winding 9 to be made from a wire that is as thick as possible and having a lowest possible through resistance for the current. The primary winding 15 and the auxiliary primary winding 16 can be made of a wire thinner than the wire of the secondary winding 9. The secondary winding 9 of the transformer 8 is connected to the phase line L1 between the receiving installation with the inverter generating voltage from renewable energy sources and the power grid. A first fuse 10 is installed between the inverter 4 and the secondary winding 9, and a second fuse 11 is installed between the secondary winding 9 and the power grid. The fuses 10, 11 are to be used mainly while connecting the regulator 1 to the installation. A contactor 14A that is controlled by the relay 14, is connected to the secondary winding 9.

The regulator 1 further comprises a controlling unit 12 for measuring the voltage in the power grid, which controls the switch 13 based on the voltage level in the power grid. The controlling unit 12 measures the maximum voltage level in the power grid over a period of time, for example over a second (therefore, the measuring time determines the operating delay of the entire circuit for reducing the voltage supplied to the energy receivers).

When the voltage in the power grid is within an allowable range, the switch 13 is set to the position as shown in Fig. 1, wherein it powers the relay 14 so that the contactor 14A controlled by this relay 14 short-circuits the secondary winding 9, so that a direct current flow between the inverter and the phase line L1 of the power grid is ensured.

In turn, when the voltage level in the power grid exceeds the upper limit of the allowable range, the controlling unit 12 switches the switch 13 to the position opposite to that shown in Fig. 1, wherein the voltage from the phase line L1 is fed to the primary winding 15 of the separating transformer 8. Therefore, the contactor 14A will be disconnected so that the current between the inverter 4 and the power grid flows through the secondary winding 9 of the separating transformer 8. The primary winding 15 therefore serves to induce a magnetic field in the transformer core and generate a voltage in the secondary winding 9 (as well as in the auxiliary primary winding 16). The current flowing through the primary winding 15 creates a magnetic field in the core of the separating transformer 8, which induces an electromotive force in the secondary winding 9 in a direction opposite to the current flow, thereby correcting (lowering) the voltage at the inverter 4. This leads to a reduction of the voltage supplied to the energy receivers 5, which in this case are powered by the inverter 4. The voltage generated in the secondary winding 9 is subtracted from the power grid voltage L1 and the inverter can work without switching off.

With respect to the functional features of the invention, the controlling unit 12 together with the switch 13 and the relay 14 constitute a control system for inducing in the secondary winding 9 of the separating transformer 8 an electromotive force opposite to the flowing current. The configuration of components as shown in Fig. 1 is only one exemplary embodiment of such system.

The separating transformer 8 may additionally include an auxiliary primary winding 16 for powering the starter circuit. The primary winding 16 is connected to a bridge 17 to power a diode 18 (that acts as a signal lamp, indicating the moment when the separating transformer 8 is active) with a resistor 19, and a relay 20 to close the resistor 21 that supplies voltage to the primary winding 15. When the primary winding 15 is energized, the current flows through resistor 21 which limits the starting current. The current flowing in the primary winding 15 induces a magnetic field in the core and a voltage is induced in the winding 16, which supplies the relay 20 through the rectifier bridge 17. The contacts of the relay 20 close the resistor 21 and the winding 15 receives the full voltage.

The regulator 1 may further include a storage 22 comprising a memory for storing historical values of the inverter voltage 4 and/or the power grid voltage.

Moreover, the regulator comprises a circuit 1' for reducing voltage from the inverter 4. Said circuit comprises an outlet socket 25, for connecting thereto an energy receiver, preferably of a type capable of accumulating large amounts of energy, such as an energy storage (in order to store the energy generated by the inverter for future use) or a heater (in order to momentarily dissipate excess of energy). The outlet socket 25 is connected to the phase line L1' by means of a contactor 24 controlled by a relay 23. The relay 23 is connected to the other elements of the regulator at a position such as to detect the active operation of the separating transformer, for example to the bridge 17. When the operation of the separating transformer is detected (i.e. it is detected that the voltage in the power grid is excessive), the relay 23 activates the contactor 24 to connect the outlet socket 25 with the phase line L1' such that the energy produced by the inverter 4 is transmitted to the energy received connected to the outlet socket 25. This avoids a situation of pushing energy from the inverter 4 to the power grid when the voltage of the power grid at the phase line L1 is excessive (some legal regulations forbid such activity).

The values of the regulator components should be selected depending on the power of the inverter. For example, components with the following parameters can be used: fuse 10 - 25A, fuse 11 - 25A, secondary winding 9 - 50A, resistor 21 - 50W/47Ohm, resistor 19 - 1kOhm, relay 20 - 24 V DC/16A. As the controlling unit, it is possible to use an RN118 circuit with a digital module having an adjustable threshold voltage level, for example set at 250 V.

The illustrated embodiment relates to a phase voltage regulator for a single phase. For three-phase inverters, regulators 1 shall be used for each phase.

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. A phase voltage regulator configured for being connected in a phase line for two-way transmission of energy between a power grid and a receiving installation comprising energy receivers (5) and an inverter (4) that is configured to generate voltage from renewable energy sources, the phase voltage regulator comprising:
- a separating transformer (8) having a secondary winding (9), configured to connect the secondary winding (9) into the phase line (L1) between the power grid (L1) and the receiving installation (L1');
- a regulating circuit configured to measure voltage at a phase line (L1) at the power grid side and, when the measured voltage exceeds a threshold value, to induce, in the secondary winding (9) of the separating transformer (8), an electromotive force having a direction opposite to the flowing current and consequently reduce the voltage of the phase line (L1') on the receiving installation side, wherein
the regulating circuit comprises:
- a first contactor (14A) connected to the secondary winding (9) of the separating transformer (8);
- a first relay (14) configured to switch on the first contactor (14A);
- a switch (13);
- a controlling unit (12) configured to measure the voltage at the phase line (L1) on the power grid side and to control the switch (13) depending on the measured value of the voltage;
- wherein the switch (13) is configured to operate:
- in a first position, when the voltage of the power grid does not exceed the threshold voltage, wherein in the first position, the switch (13) is configured to provide a signal to the first relay (14) so as to short the first contactor (14A) to the position at which the secondary winding (9) is short-circuited for direct connection of the receiving installation to the power grid; and
- in a second position, when the voltage of the power grid exceeds the threshold voltage, wherein in the second position, the switch (13) J is configured not to provide a signal to the first relay (14), so that the first contactor (14A) does not close the secondary winding (9) and the receiving installation is connected to the power grid through the secondary winding (9), and
wherein the regulating circuit is configured to supply voltage to the primary winding (15) to induce magnetic field in the core of the separating transformer (8); and the phase voltage regulator further comprises:
an outlet socket (25) for connecting thereto an energy receiver; a second contactor (24); and a second relay (23);
wherein the outlet socket (25) is configured to be connected to the phase line (L1') on the receiving installation side by means of the second contactor (24) controlled by the second relay (23) configured to close the second contactor (24) upon detecting activity of the separating transformer (8).

2. The phase voltage regulator according to claim 1, wherein the separating transformer (8) comprises an auxiliary primary winding (16) connected to a bridge (17) connected to a third relay (20) that is connected in parallel to a resistor (21) in the line that is configured to supply voltage to the winding primary (15) of the separating transformer (8).

3. The phase voltage regulator according to claim 1, wherein the separating transformer (8) comprises an auxiliary primary winding (16) connected to a bridge (17) that is connected to a signaling diode (18).

4. The phase voltage regulator according to any of claims 1 to 3, further comprising a storage (22) with a memory configured to store historical values of the voltage at the inverter (4) and/or of the voltage at the power grid.

5. A method for adjusting phase voltage supplied through a phase line (L1) from a power grid to a receiving installation comprising an inverter (4) that is configured to generate voltage from renewable energy sources and energy receivers (5), the method comprising connecting, into the phase line (L1) between the power grid and the receiving installation, the phase voltage regulator according to any of claims 1-4.

6. An energy receiving installation comprising energy receivers (5), an inverter (4) that is configured to generate voltage from renewable energy sources, and the phase voltage regulator according to any of claims 1-4, the energy receiving installation configured to be connected to a phase line (L1) of the power grid via the phase voltage regulator.

## Patentansprüche

1. Phasenspannungsregler, der konfiguriert ist, um in einer Phasenleitung für Zweiwegeübertragung von Energie zwischen einem Stromnetz und einer Empfangsanlage verbunden zu sein, umfassend Energieempfänger (5) und einen Wechselrichter (4), der konfiguriert ist, um Spannung aus erneuerbaren Energiequellen zu erzeugen, der Phasenspannungsregler umfassend:
- einen Trenntransformator (8), der eine Sekundärwicklung (9) aufweist, die konfiguriert ist, um die Sekundärwicklung (9) zwischen dem Stromnetz (L1) und der Empfangsanlage (L1') mit der Phasenleitung (L1) zu verbinden;
- eine Regelschaltung, die konfiguriert ist, um die Spannung an einer Phasenleitung (L 1) auf der Stromnetzseite zu messen, und wenn die gemessene Spannung einen Schwellenwert überschreitet, in der Sekundärwicklung (9) des Trenntransformators (8) eine elektromotorische Kraft zu induzieren, die eine dem fließenden Strom entgegengesetzte Richtung aufweist, und folglich die Spannung der Phasenleitung (L1') auf der Empfangsanlagenseite reduziert, wobei der Regelkreis Folgendes umfasst:
- ein erstes Schaltschütz (14A), das mit der Sekundärwicklung (9) des Trenntransformators (8) verbunden ist;
- ein erstes Relais (14), das konfiguriert ist, um das erste Schaltschütz (14A) einzuschalten;
- einen Schalter (13);
- eine Steuereinheit (12), die konfiguriert ist, um die Spannung an der Phasenleitung (L1) auf der Stromnetzseite zu messen und den Schalter (13) abhängig von dem gemessenen Wert der Spannung zu steuern;
- wobei der Schalter (13) konfiguriert ist, um wie folgt betrieben zu werden:
- in einer ersten Stellung, wenn die Spannung des Stromnetzes die Schwellenspannung nicht überschreitet, wobei der Schalter (13) in der ersten Position konfiguriert ist, um ein Signal an das erste Relais (14) bereitzustellen, um das erste Schaltschütz (14A) in der Position kurzzuschließen, in der die Sekundärwicklung (9) für den direkten Anschluss der Empfangsanlage an das Stromnetz kurzgeschlossen ist; und
- in einer zweiten Stellung, wenn die Spannung des Stromnetzes die Schwellenspannung überschreitet, wobei der Schalter (13) in der zweiten Stellung konfiguriert ist, um kein Signal an das erste Relais (14) bereitzustellen, sodass das erste Schaltschütz (14A) die Sekundärwicklung (9) nicht schließt und die Empfangsanlage über die Sekundärwicklung (9) mit dem Stromnetz verbunden ist, und
wobei der Regelkreis konfiguriert ist, um der Primärwicklung (15) eine Spannung zuzuführen, um ein Magnetfeld in dem Kern des Trenntransformators (8) zu induzieren; und der Phasenspannungsregler ferner Folgendes umfasst:
eine Ausgangsbuchse (25), um daran einen Energieempfänger anzuschließen; ein zweites Schaltschütz (24); und ein zweites Relais (23);
wobei die Ausgangsbuchse (25) konfiguriert ist, um mit der Phasenleitung (L1') auf der Seite der Empfangsanlage mittels des zweiten Schaltschützes (24) verbunden zu werden, das durch das zweite Relais (23) gesteuert wird, das konfiguriert ist, um das zweite Schaltschütz (24) zu schließen, wenn es eine Aktivität des Trenntransformators (8) erkennt.

2. Phasenspannungsregler nach Anspruch 1, wobei der Trenntransformator (8) eine Hilfsprimärwicklung (16) umfasst, die mit einer Brücke (17) verbunden ist, die mit einem dritten Relais (20) verbunden ist, das parallel zu einem Widerstand (21) in der Leitung geschaltet ist, die konfiguriert ist, um die Primärwicklung (15) des Trenntransformators (8) mit Spannung zu versorgen.

3. Phasenspannungsregler nach Anspruch 1, wobei der Trenntransformator (8) eine Hilfsprimärwicklung (16) umfasst, die mit einer Brücke (17) verbunden ist, die mit einer Signaldiode (18) verbunden ist.

4. Phasenspannungsregler nach einem der Ansprüche 1 bis 3, ferner umfassend eine Speicherung (22) mit einem Speicher, der konfiguriert ist, um historische Werte der Spannung an dem Wechselrichter (4) und/oder der Spannung an dem Stromnetz zu speichern.

5. Verfahren zum Einstellen der Phasenspannung, die über eine Phasenleitung (L1) von einem Stromnetz zu einer Empfangsanlage zugeführt wird, umfassend einen Wechselrichter (4), der konfiguriert ist, um Spannung aus erneuerbaren Energiequellen und Energieempfängern (5) zu erzeugen, das Verfahren umfassend ein Verbinden des Phasenspannungsreglers nach einem der Ansprüche 1 bis 4 in die Phasenleitung (L1) zwischen dem Stromnetz und der Empfangsanlage.

6. Energieempfangsanlage, umfassend Energieempfänger (5), einen Wechselrichter (4), der konfiguriert ist, um Spannung aus erneuerbaren Energiequellen zu erzeugen, und den Phasenspannungsregler nach einem der Ansprüche 1 bis 4, wobei die Energieempfangsanlage konfiguriert ist, um über den Phasenspannungsregler mit einer Phasenleitung (L1) des Stromnetzes verbunden zu sein.

## Revendications

1. Régulateur de tension de phase configuré pour se brancher dans une ligne de phase pour une transmission bidirectionnelle d'énergie entre un réseau électrique et une installation de réception comprenant des récepteurs d'énergie (5) et un onduleur (4) qui est configuré pour générer une tension à partir de sources d'énergie renouvelables, le régulateur de tension de phase comprenant :
- un transformateur de séparation (8) comportant un enroulement secondaire (9), configuré pour brancher l'enroulement secondaire (9) dans la ligne de phase (L1) entre le réseau électrique (L1) et l'installation de réception (L1') ;
- un circuit de régulation configuré pour mesurer la tension au niveau d'une ligne de phase (L1) côté réseau électrique et, lorsque la tension mesurée dépasse une valeur seuil, pour induire, dans l'enroulement secondaire (9) du transformateur de séparation (8), une force électromotrice présentant une direction opposée au courant circulant et réduisant par conséquent la tension de la ligne de phase (L1') côté installation de réception,
ledit circuit de régulation comprenant :
- un premier contacteur (14A) branché à l'enroulement secondaire (9) du transformateur de séparation (8) ;
- un premier relais (14) configuré pour enclencher le premier contacteur (14A) ;
- un commutateur (13) ;
- une unité de commande (12) configurée pour mesurer la tension au niveau de la ligne de phase (L1) côté réseau électrique et pour commander le commutateur (13) en fonction de la valeur mesurée de la tension ;
- ledit commutateur (13) étant configuré pour fonctionner :
- dans une première position, lorsque la tension du réseau électrique ne dépasse pas la tension seuil, dans la première position, ledit commutateur (13) étant configuré pour délivrer un signal au premier relais (14) de manière à court-circuiter le premier contacteur (14A) dans la position dans laquelle l'enroulement secondaire (9) est court-circuité pour le branchement direct de l'installation de réception au réseau électrique ; et
- dans une seconde position, lorsque la tension du réseau électrique dépasse la tension de seuil, dans la seconde position, ledit commutateur (13) étant configuré pour ne pas délivrer de signal au premier relais (14), de sorte que le premier contacteur (14A) ne ferme pas l'enroulement secondaire (9) et que l'installation de réception soit connectée au réseau électrique par l'intermédiaire de l'enroulement secondaire (9), et
ledit circuit de régulation étant configuré pour délivrer une tension à l'enroulement primaire (15) afin d'induire un champ magnétique dans le noyau du transformateur de séparation (8) ; et
ledit régulateur de tension de phase comprenant en outre :
une prise de courant (25) pour y brancher un récepteur d'énergie ; un second contacteur (24) ; et un deuxième relais (23) ;
ladite prise de courant (25) étant configurée pour se brancher à la ligne de phase (L1') côté installation de réception au moyen du second contacteur (24) commandé par le deuxième relais (23) configuré pour fermer le second contacteur (24) lors de la détection d'une activité du transformateur de séparation (8).

2. Régulateur de tension de phase selon la revendication 1, ledit transformateur de séparation (8) comprenant un enroulement primaire auxiliaire (16) branché à un pont (17) branché à un troisième relais (20) qui est branché en parallèle à une résistance (21) dans la ligne qui est configurée pour alimenter en tension l'enroulement primaire (15) du transformateur de séparation (8).

3. Régulateur de tension de phase selon la revendication 1, ledit transformateur de séparation (8) comprenant un enroulement primaire auxiliaire (16) branché à un pont (17) qui est branché à une diode de signalisation (18).

4. Régulateur de tension de phase selon l'une quelconque des revendications 1 à 3, comprenant en outre un stockage (22) avec une mémoire configurée pour stocker des valeurs historiques de la tension au niveau de l'onduleur (4) et/ou de la tension au niveau du réseau électrique.

5. Procédé permettant d'ajuster la tension de phase délivrée par l'intermédiaire d'une ligne de phase (L1) d'un réseau électrique à une installation de réception comprenant un onduleur (4) qui est configuré pour générer une tension à partir de sources d'énergie renouvelables et de récepteurs d'énergie (5), le procédé comprenant le branchement, dans la ligne de phase (L1) entre le réseau électrique et l'installation de réception, du régulateur de tension de phase selon l'une quelconque des revendications 1 à 4.

6. Installation de réception d'énergie comprenant des récepteurs d'énergie (5), un onduleur (4) qui est configuré pour générer une tension à partir de sources d'énergie renouvelables, et le régulateur de tension de phase selon l'une quelconque des revendications 1 à 4, l'installation de réception d'énergie configurée pour être branchée à une ligne de phase (L1) du réseau électrique par l'intermédiaire du régulateur de tension de phase.
